Europäisches Patentamt

European Patent Office

Office européen des brevets

(11) Veröffentlichungsnummer: **0 482 377 A2**

# (12) EUROPÄISCHE PATENTANMELDUNG

(21) Anmeldenummer: **91116422.6**

(22) Anmeldetag: **26.09.91**

(51) Int. Cl.5: **G01N 21/77**, G01N 21/41, G02B 6/12

(30) Priorität: **25.10.90 DE 4033912**

(43) Veröffentlichungstag der Anmeldung:
**29.04.92 Patentblatt 92/18**

(84) Benannte Vertragsstaaten:
**DE FR GB IT**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Brandenburg, Albrecht,Dr.-Ing. Dipl.-Phys.**
**Alte Strasse 24**
**W-7802 Merzhausen(DE)**
Erfinder: **Fischer, Andreas, Dipl.-Ing. (FH)**
**Haslacher Strasse 148**
**W-7800 Freiburg(DE)**

(74) Vertreter: **Patentanwälte Dipl.-Ing. Hans Schmitt Dipl.-Ing. Wolfgang Maucher**
**Dreikönigstrasse 13**
**W-7800 Freiburg i.Br.(DE)**

(54) Optischer Sensor.

㊼ Ein optischer Sensor (1) mit einer integriert optischen Anordnung weist einen Wellenleiter (4) sowie wenigstens ein bei diesem Wellenleiter angeordnetes Beugungsgitter (5) auf. Über das Beugungsgitter kann Licht in den Wellenleiter eingekoppelt werden. Im Reflektionsbereich des Beugungsgitters wird unter dem Strahlwinkel, für den die Koppelbedingungen und damit die Beugung in den Wellenleiter erfüllt ist, ein Teil des Lichtes durch den Wellenleiter abgeleitet, so daß unter diesem Winkel eine dunkle Linie (14) entsteht, deren Lage ausgewertet wird. Das Meßergebnis wird durch die effektive Brechzahl beeinflußt. Diese wiederum ist unter anderem abhängig von der Meßsubstanz (9).
Zur Vermeidung aufwendiger Justiereinrichtungen für den Einkoppellichtstrahl (12) ist ein konvergentes Einkoppel-Lichtstrahlenbündel (13) vorgesehen, das den zum Beugungsgitter (5) passenden Einkoppellichtstrahl überdeckt bzw. beinhaltet. Dadurch ist der Einstrahlwinkel des Lichtstrahlenbündels (13) weitestgehend unkritisch, wobei in vorteilhafter Weise gegebenenfalls auftretende Lageverschiebungen keinen nachteiligen Einfluß auf das Meßergebnis haben.

Fig.1

EP 0 482 377 A2

Die Erfindung betrifft einen optischen Sensor mit einer integriert optischen Anordnung, die einen Wellenleiter gegebenenfalls mit einer sensitiven Schicht sowie wenigstens ein bei diesem Wellenleiter angeordnetes Beugungsgitter zum Einkoppeln von Licht in den Wellenleiter aufweist, wobei Änderungen der effektiven Brechzahl gemessen werden.

Solche optische Sensoren auf der Basis von Beugungsgittern detektieren bestimmte Meßsubstanzen, messen Brechzahlen von flüssigen Medien oder weisen kleine mechanische Verschiebungen nach, in dem die effektive Brechzahl eines Wellenleiters beeinflußt wird. Diese effektive Brechzahl wird mit Hilfe des Beugungsgitters bestimmt, durch das Licht in den Wellenleiter eingekoppelt bzw. aus dem Wellenleiter ausgekoppelt wird.

Sensoren dieser Art sind beispielsweise aus der PCT-WO 86/07149 bekannt.

Die hohe Genauigkeit dieses Sensors beruht im wesentlichen darauf, daß die Ein- oder Auskopplung des Lichtes in den Wellenleiter bzw. aus diesem Wellenleiter heraus mit Hilfe des Gitters nur unter einem sehr begrenzten Winkelbereich möglich ist.

Bekanntermaßen erfolgt dabei das Einkoppeln in den Wellenleiter mit einem Parallelstrahl. Zur Auswertung kann eine Messung der Lichtintensität am Ende des Wellenleiters vorgenommen werden. Bei statischer Anordnung mit feststehendem Sensorkopf und bezüglich des Einstrahlwinkels feststehendem Lichtstrahl ist der Meßbereich stark eingeschränkt, da nur in einem kleinen Bereich von effektiven Brechzahlen und entsprechenden Einkoppelwinkeln ein Signal am Detektor gemessen werden kann.

Da der Einstrahlwinkel des Lichtstrahles in das Beugungsgitter sehr genau (Hundertstel-Grad-Bereich) stimmen muß, um ein Einkoppeln in den Wellenleiter zu erreichen, ist ein hoher Aufwand bezüglich der mechanischen Lagerung der zusammenwirkenden Baugruppen und auch ein hoher Justieraufwand erforderlich.

Es ist auch schon bekannt, eine Drehung oder Schwenkung des Sensorkopfes vorzusehen, so daß ein größerer Bereich von Koppelwinkeln abgetastet werden kann. In diesem Fall sind jedoch zusätzlich präzise mechanische Verstellelemente im Sensorkopf erforderlich.

Weiterhin kennt man das Einkoppeln eines Lichtstrahles an der Sensorkopf-Kante (Stirnflächenkopplung) und Auskopplung durch das Gitter. Bei dieser Anordnung ist jedoch bei der Herstellung ein zusätzlicher Bearbeitungsschritt wegen der notwendigen Stirnflächenpolitur erforderlich und auch eine sehr präzise Justierung der Lichtquelle bzw. einer Einkoppelungsoptik relativ zur Sensorkopfkante.

Der "kritische" Einkoppelbereich ist dabei vom Beugungsgitter zur Sensorkopfkante verlagert, wobei aber ebenfalls die Einstrahlstelle in den Wellenleiter, der Dickenabmessungen im Mikrometerbereich hat und der Einstrahlwinkel stimmen und dementsprechend exakt justiert werden müssen.

Nachteilig ist hierbei auch, daß im Übergangsbereich zwischen Lichtquelle bzw. einer Optik und der Sensorkopfkante das Meßergebnis beeinflussendes Streulicht auftreten kann.

Aufgabe der vorliegenden Erfindung ist es, bei einem optischen Sensor der eingangs erwähnten Art den mechanischen Aufwand zum Justieren und Einstellen des Einkoppelwinkels wesentlich zu vereinfachen und somit auch das Meßverfahren insgesamt zu vereinfachen.

Insbesondere sollen dabei auch mechanisch bewegliche Teile vermieden werden. Weiterhin ist es Ziel der Erfindung einen kleinen Sensorkopf mit geringer Störanfälligkeit zu schaffen.

Zur Lösung dieser Aufgabe wird erfindungsgemäß insbesondere vorgeschlagen, daß ein konvergentes, im wesentlichen monochromatisches Einkoppel-Lichtstrahlenbündel oder ein konvergenter Lichtstrahl vorgesehen ist, das (der) den zum Beugungsgitter passenden Einkoppel-Lichtstrahl überdeckt bzw. beinhaltet und daß bei einem im Bereich des Beugungsgitters reflektierten, einen Zeiger bildenden Auskoppel-Lichtstrahl oder dergleichen eine Meßeinrichtung für den Auskoppelwinkel vorgesehen ist.

Durch das einstrahlende, konvergierende Lichtbündel ist nun in vorteilhafter Weise keine aufwendige Justage mehr erforderlich, da nur noch sichergestellt sein muß, daß in dem Lichtbündel der "passende" Einkoppellichtstrahl enthalten ist und somit das Lichtbündel den entsprechenden Einkoppelwinkel mit überdeckt.

Dies ist in der Praxis mit einfachen Mitteln realisierbar, indem beispielsweise eine Fokussieroptik verwendet wird.

Die Winkellage des passenden Einkoppellichtstrahles wird anhand des Reflexes bestimmt, der an einer der Grenzflächen zwischen Substrat-Wellenleiter, Wellenleiter - Meßsubstanz/Deckschicht entsteht.

Unter dem Strahlwinkel, für den die Koppelbedingungen und damit die Beugung in den Wellenleiter erfüllt ist, wird ein Teil des Lichtes durch den Wellenleiter abgeleitet. In diesem Falle entsteht im Reflex unter diesem Winkel eine dunkle Linie, deren Lage z.B. mit einer Diodenzeile ausgewertet werden kann.

Der Vorteil dieses Sensors bzw. des zugehörigen Auswerteverfahrens besteht insbesondere darin, daß weder bewegliche Teile noch eine Kopplung des Lichtes durch die Sensorkopf-Kante erforderlich sind. Da der Reflex ausgewertet wird, sind auch keine Schutzschichten über dem Wellenleiter notwendig. Damit wird die Präparation des Sensorkopfes sehr einfach.

Eine vorteilhafte Weiterbildung der Erfindung sieht vor, daß der auf einem Substrat befindliche Wellenleiter mit Beugungsgitter, gegebenenfalls sensitiver Schicht und dergleichen als Sensorkopf eine auswechselbare Baugruppe des Sensors bilden und daß für diese Baugruppe eine Aufnahme mit Halterung vorgesehen ist.

Dieses Auswechseln des Sensorkopfes kann nun trotz der dabei auftretenden, unvermeidlichen Lagedifferenzen problemlos durchgeführt werden, da das einstrahlende Lichtbündel einen so großen und den Einkoppellichtstrahl miterfassenden Winkelbereich überdeckt, daß auch bei verschiedenen Sensorköpfen eine kontinuierliche Messung möglich ist. Auch sind keine Lagenachjustierungen erforderlich.

Dies ist bei Serienmessungen, wo der Sensorkopf nur für eine einzige Messung verwendet wird, besonders vorteilhaft. Es ergeben sich erhebliche Zeiteinsparungen und eine vereinfachte Bedienung.

Als sensitive Schichten kommen alle in Form dünner Beschichtungen preparierbaren Substanzen in Frage, die eine hinreichende optische Transparenz aufweisen und ihre optischen Eigenschaften durch Adsorption eines bestimmten, nachzuweisenden Stoffes verändern. Zum Beispiel sind verschiedene Polymere oder in Polymere bzw. Siloxane eingebettete organische Funktionsgruppen verwendbar. Besonders vorteilhaft ist es, wenn als sensitive Schicht oder als Wellenleiter Material aus der Substanzklasse Heteropolysiloxane (HPS) vorgesehen ist und daß durch gezielte Auswahl der sensitiven Schicht aus dieser Substanzklasse jeweils eine bestimmte Stoffkomponente bestimmbar ist. Bei Einsatz dieser Substanzklasse für die sensitive Schicht aus einer solchen Substanz ist im verwendeten Wellenlängenbereich transparent und auch homogen, um Steuerverluste zu vermeiden.

Gegebenenfalls können im Verlauf des Wellenleiters mehrere, vorzugsweise zwei Beugungsgitter vorgesehen sein, wobei in ein erstes Beugungsgitter mit dem konvergenten Einkoppel-Lichtbügel eingestrahlt und bei einem anderen Beugungsgitter der als Meßzeiger dienende Lichtstrahl ausgekoppelt wird. In diesem Falle erreicht man durch den separat ausgekoppelten Lichtstrahl einen besonders guten Kontrast, da das beim ersten Beugungsgitter reflektierte Licht abgeschattet werden kann und der in den Lichtleiter eingekoppelte Lichtstrahl beim zweiten Beugungsgitter dann ausgekoppelt wird.

Die Erfindung betrifft auch ein Verfahren zum Betreiben eines optischen Sensors. Dieses Verfahren ist insbesondere dadurch gekennzeichnet, daß ein konvergentes Lichtstrahlenbündel auf ein bei einem Wellenleiter befindliches Beugungsgitter so eingestrahlt wird, daß in diesem Lichtstrahlenbündel ein über das Beugungsgitter in den Wellenleiter einkoppelnder Lichtstrahl enthalten ist und daß ein als Meßzeiger dienender, beim Beugungsgitter ausgekoppelter Lichtstrahl oder eine dunkle Linie im Reflektionsbereich bezüglich des Austrittswinkels gemessen werden.

Die sich daraus ergebenden Vorteile, insbesondere das bezüglich des Einstrahlwinkels praktisch justierfreie Einstrahlen des Einkoppellichtstrahles, wurden im wesentlichen bereits vorbeschrieben.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt etwas schematisiert:

Fig. 1 eine Darstellung eines optischen Sensors mit einfallendem und reflektiertem Licht und

Fig. 2 eine Darstellung eines Sensors etwa vergleichbar mit Fig. 1, hier jedoch mit zwei Beugungsgittern.

Ein im ganzen mit 1 bezeichneter optischer Sensor weist einen Sensorkopf 2 mit einem auf einem Substrat 3 befindlichen Wellenleiter 4, der hier als wellenleitender Film ausgebildet ist. Bei dem Wellenleiter 4 befindet sich noch ein Beugungsgitter 5, durch das Licht in den Wellenleiter 4 eingekoppelt werden kann.

Zu dem Sensor 1 gehört noch eine Lichtquelle 6, eine Fokussieroptik 7 sowie eine Meßeinrichtung 8, mittels der Änderungen der effektiven Brechzahl gemessen werden können.

Die effektive Brechzahl ist im wesentlichen von dem Substrat 3 und dem Wellenleiter 4 abhängig, wobei deren Brechzahlen und auch die Schichtdikken bestimmend sind.

Die effektive Brechzahl kann durch Anlagerung einer Meßsubstanz 9 an den Wellenleiter 4 beeinflußt werden.

Um solche Änderungen der effektiven Brechzahl erkennen zu können, wird über das Beugungsgitter 5 im wesentlichen monochromatisches Licht 10 in den Wellenleiter eingekoppelt. Änderungen der effektiven Brechzahl machen sich sowohl am Ende des Wellenleiters 4 als Intensitätsänderungen als auch im Reflektionsbereich 11 durch Positionsverschiebungen bemerkbar. Bei dem erfindungsgemäßen, optischen Sensor 1 erfolgt eine Auswertung im Reflektionsbereich 11.

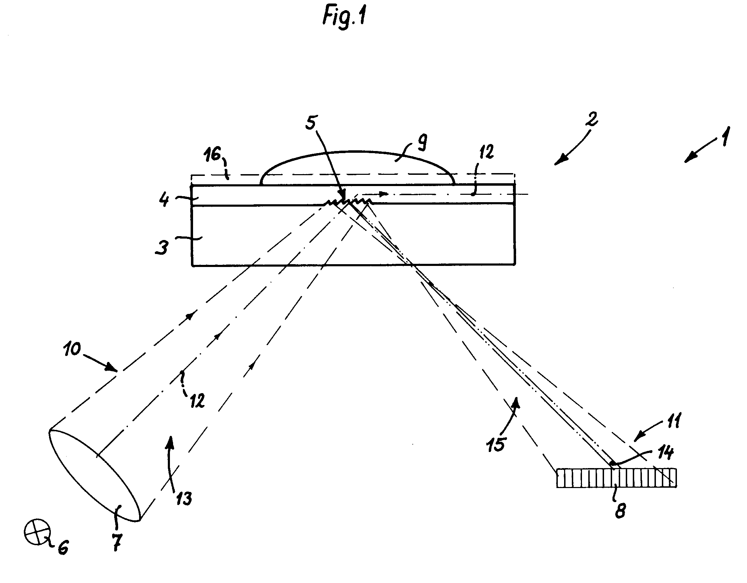

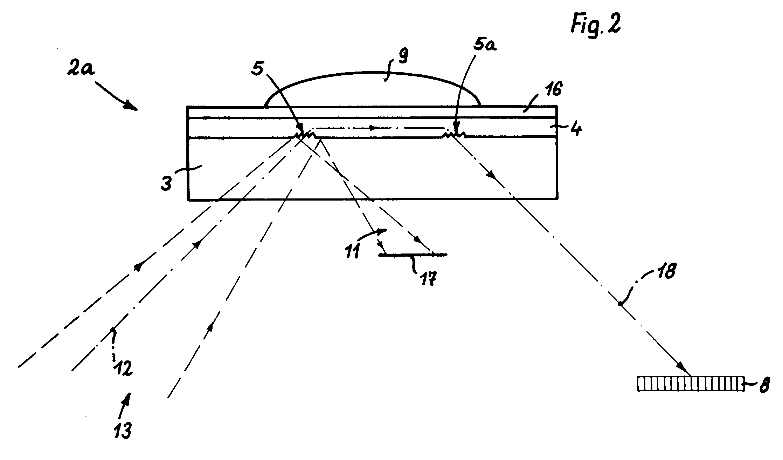

Das Ein- oder Auskoppeln des Lichtes in den Wellenleiter 4 bzw. aus diesem heraus ist mit Hilfe des Beugungsgitters 5 nur in einem sehr eng begrenzten Winkelbereich möglich. In den Fig. 1 und 2 ist die Lage des passenden Einkoppellichtstrahles 12 durch eine strichpunktierte Linie dargestellt.

Nur bei exakter Einhaltung dieser Winkellage relativ zum Beugungsgitter erfolgt auch ein Einkoppeln in den Wellenleiter 4. Auch innerhalb dieses Wellenleiters 4 ist der Einkoppellichtstrahl 12 strichpunktiert angedeutet.

Um nun aufwendige mechanische Justiereinrichtungen zum exakten Einstellen des Einkoppellichtstrahles 12 zu vermeiden ist bei der vorliegenden Sensoranordnung ein konvergentes Einkoppel-Lichtstrahlenbündel 13 vorgesehen, welches den passenden Einkoppellichtstrahl 12 mit überdeckt. Dementsprechend ist keine exakte Einjustierung eines einzelnen Einkoppellichtstrahles 12 mehr erforderlich, sondern es genügt hier ein ungefähres und sehr unkritisches Ausrichten des Lichtstrahlenbündels 13. Innerhalb dieses Lichtstrahlenbündels 13 liegen eine Vielzahl von nicht parallelen Lichtstrahlen, die somit alle unter einem anderen Winkel beim Beugungsgitter 5 einstrahlen. Auch bei Lageverschiebungen der Lichtquelle 6 und Sensorkopf 2 sind keine Nachjustierarbeiten erforderlich, da innerhalb des Lichtstrahlenbündels 13 der jeweils passende Einkoppellichtstrahl 12 enthalten ist.

Unter dem Strahlwinkel, für den die Koppelbedingungen und damit die Beugung in den Wellenleiter 4 erfüllt ist, wird ein Teil des Lichtes durch den Wellenleiter 4 abgeleitet. Im Reflektionsbereich 11 ergibt sich unter dem Reflektionswinkel des Einkoppellichtstrahles 12 eine dunkle Linie 14, die zur Verdeutlichung in Fig. 1 durch Doppelpunktstrichlinierte Linien abgegrenzt, dargestellt ist. Aus der Lageveränderung dieser dunklen Linie 14, die als Zeiger dient, sind Änderungen der effektiven Brechzahl erkennbar. Da hier die Lage des durch die dunkle Linie 14 gebildeten Zeigers und nicht die Intensität maßgebend sind, sind auch keine Referenz-Signale zum Ausblenden von Helligkeitsschwankungen erforderlich,bzw. wird eine Referenzintensität durch die in jedem Fall miterfaßten hellen Bereiche im Reflex automatisch gewonnen. Als Meßeinrichtung 8 im Bereich des Auskoppellichtstrahles 15 kann ein Fotodioden-Array vorgesehen sein.

Wie bereits vorerwähnt, wird die effektive Brechzahl durch an dem wellenleitenden Film 4 angelagerte Meßsubstanz 9 verändert. Dementsprechend würde sich auch die dunkle Linie 14 innerhalb des divergierenden Auskoppellichtstrahles 15 verändern.

Prinzipiell können auch bei der erfindungsgemäßen Sensoranordnung übliche Sensorköpfe 2 eingesetzt werden.

In Fig. 1 ist strichliniert und in Fig. 2 durchgezogen eine auf dem Wellenleiter 4 bzw. dem wellenleitenden Film befindliche sensitive Schicht 16 angedeutet. Diese sensitive Schicht kann bevorzugt aus einem Material der Substanzklasse Heteropolysiloxane (HPS) bestehen. Eine solche HPS-Schicht ändert unter dem Einfluß des zu messenden Stoffes ihre Brechzahl und beeinflußt damit auch die effektive Brechzahl. Besonders vorteilhaft ist bei Verwendung einer HPS-Schicht 16, daß auch Gasmessungen durchgeführt werden können. Die HPS-Schicht kann auch selbst die lichtleitende Schicht 4 bilden.

Durch gezielte Auswahl der sensitiven Schicht 16 bzw. 4 aus der Substanzklasse der Heteropolysiloxane können spezielle Stoffe selektiv erfaßt werden.

Erwähnt sei noch, daß bei Verwendung einer HPS-Schicht sowohl Flüssigkeiten als auch Gase gemessen werden können.

Fig. 2 zeigt einen optischen Sensor mit einem Sensorkopf 2a, der im Bereich seines Wellenleiters 4 zwei Beugungsgitter 5, 5a aufweist. Bei diesem Sensor wird in das erste Beugungsgitter 5 ebenfalls mit einem konvergenten Lichtstrahlenbündel 13 eingestrahlt. Der innerhalb dieses Lichtstrahlenbündels 13 liegende Einkoppellichtstrahl 12 wird innerhalb des Wellenleiters 4 bis zum zweiten Beugungsgitter 5a geführt und dort ausgekoppelt. Das beim ersten Beugungsgitter 5 reflektierte Licht kann durch eine Blende 17 abgeschattet werden. Der separat ausgekoppelte Lichtstrahl 18 weist einen besonders guten Kontrast auf. Die Lage dieses Auskoppellichtstrahles 18 kann ebenfalls mit einer beispielsweise durch ein Diodenarray gebildeten Meßeinrichtung 8 ausgewertet werden.

Bei bestimmten Gitterstrukturen besteht auch die Möglichkeit, innerhalb eines einzigen Beugungsgitters den Einkoppellichtstrahl 12 auszukoppeln, so daß dann innerhalb des divergierenden Auskoppellichtstrahles 15 keine dunkle Linie wie bei dem Ausführungsbeispiel gemäß Fig. 1, sondern der helle, ausgekoppelte Lichtstrahl 18 erscheint.

Durch das Einstrahlen einer Vielzahl nicht paralleler Lichtstrahlen in Form eines konvergierenden Lichtstrahlenbündels 13, wirken sich Lageänderungen der Lichtquelle 6 und/oder des Sensorkopfes 2, 2a nicht nachteilig auf das Meßergebnis aus. Dies eröffnet die Möglichkeit, den Sensorkopf auswechselbar anzuordnen. Es sind dadurch auch Serienmessungen durchführbar, wo für jede Messung ein separater Sensorkopf 2 oder 2a eingesetzt werden muß. Nach dem Auswechseln des Sensorkopfes kann direkt und ohne Nachjustierungen mit der Messung begonnen werden.

Erwähnt sei noch, daß auf einem Substrat 3 auch mehrere Meßbereiche nebeneinander angeordnet sein können. Beispielsweise könnten in den unterschiedlichen Bereichen auch unterschiedliche sensitive Schichten 16 vorgesehen sein, so daß bei der Untersuchung eines Stoffes unterschiedliche Stoffkomponenten bestimmbar sind.

Alle in der Beschreibung, den Ansprüchen und der Zeichnung dargestellten Merkmale können sowohl einzeln als auch in beliebiger Kombination miteinander erfindungswesentlich sein.

**Patentansprüche**

1. Optischer Sensor mit einer integriert optischen Anordnung, die einen Wellenleiter gegebenenfalls mit einer sensitiven Schicht sowie wenigstens ein bei diesem Wellenleiter angeordnetes Beugungsgitter zum Einkoppeln von Licht in den Wellenleiter aufweist, wobei Änderungen der effektiven Brechzahl gemessen werden, **dadurch gekennzeichnet,** daß ein konvergentes, im wesentlichen monochromatisches Einkoppel-Lichtstrahlenbündel (13) oder ein konvergenter Lichtkegel vorgesehen ist, das(der) den zum Beugungsgitter (5) passenden Einkoppellichtstrahl (12) überdeckt bzw. beinhaltet und daß bei einem im Bereich des Beugungsgitters (5) reflektierten, einen Zeiger bildenden Auskoppel-Lichtstrahl oder dergleichen eine Meßeinrichtung (8) für den Auskoppelwinkel vorgesehen ist.

2. Sensor nach Anspruch 1, dadurch gekennzeichnet, daß der auf einem Substrat (3) befindliche Wellenleiter (4) mit Beugungsgitter (5), gegebenenfalls sensitiver Schicht (16) und dergleichen als Sensorkopf (2, 2a) eine auswechselbare Baugruppe des Sensors (1) bilden und daß für diese Baugruppe eine Aufnahme mit Halterung vorgesehen ist.

3. Sensor nach Anspruch 1 oder 2, dadurch gekennzeichnet, daß als sensitive Schicht (16) oder als Wellenleiter (4) Material aus der Substanzklasse Heteropolysiloxane (HPS) vorgesehen ist und daß durch gezielte Auswahl der sensitiven Schicht aus dieser Substanzklasse jeweils eine bestimmte Stoffkomponente bestimmbar ist.

4. Sensor nach einem der Ansprüche 1 bis 3, dadurch gekennzeichnet, daß zur Bildung des konvergenten Einkoppel-Lichtstrahlenbündels (13) eine Lichtquelle (6) mit wenigstens einer im Strahlengang angeordneten Fokussieroptik (7) vorgesehen ist.

5. Sensor nach einem der Ansprüche 1 bis 4, dadurch gekennzeichnet, daß als Meßeinrichtung (8) für den Auskoppel-Lichtstrahl (15) oder eine dunkle Linie (14) ein oder mehrere Lichtdetektoren, vorzugsweise Fotodioden-Arrays vorgesehen sind.

6. Sensor nach einem der Ansprüche 1 bis 5, dadurch gekennzeichnet, daß im Verlauf des Wellenleiters (4) mehrere, vorzugsweise zwei Beugungsgitter (5, 5a) vorgesehen sind und daß in ein erstes Beugungsgitter (5) mit dem konvergenten Einkoppel-Lichtstrahlenbündel (13) eingestrahlt und bei einem anderen Beugungsgitter (5a) der als Meßzeiger dienende Lichtstrahl (18) ausgekoppelt wird.

7. Sensor nach einem der Ansprüche 1 bis 6, dadurch gekennzeichnet, daß auf einem Substrat (3) mehrere Meßanordnungen mit unterschiedlichen sensitiven Schichten vorgesehen sind.

8. Verfahren zum Betreiben eines optischen Sensors nach Oberbegriff des Anspruches 1, dadurch gekennzeichnet, daß ein konvergentes Lichtstrahlenbündel (13) auf ein bei einem Wellenleiter befindliches Beugungsgitter (5) so eingestrahlt wird, daß in diesem Lichtstrahlenbündel ein über das Beugungsgitter (5) in den Wellenleiter (4) einkoppelnder Lichtstrahl (12) enthalten ist und daß ein als Meßzeiger dienender , beim Beugungsgitter ausgekoppelter Lichtstrahl (18) oder eine dunkle Linie (14) im Reflektionsbereich (11) bezüglich des Austrittswinkels gemessen werden.

Fig.1

EP 0 482 377 A2

Fig.2